# EUROPÄISCHE PATENTSCHRIFT

(11) **EP 2 471 426 B1**
(45) Veröffentlichungstag und Bekanntmachung des Hinweises auf die Patenterteilung: **27.03.2019**
(21) Anmeldenummer: 12150001.1
(22) Anmeldetag: 02.01.2012
(51) Int. Cl.: A47L 9/00, G05D 1/02

(54) **Verfahren zur gleichzeitigen Bestimmung und Kartenbildung**
Method for simultaneous detection and map creation
Procédé de détermination et de formation de cartes simultanées

(30) Priorität: 03.01.2011 DE 102011000009
(43) Veröffentlichungstag der Anmeldung: 04.07.2012
(73) Patentinhaber: Vorwerk & Co. Interholding GmbH, 42275 Wuppertal (DE)
(72) Erfinder: Meggle, Martin, 33442 Herzebrock (DE); Sauerwald, Andres, 46238 Bottrop (DE); Wallmeyer, Mario, 40217 Düsseldorf (DE)
(74) Vertreter: Müller, Enno

(56) Entgegenhaltungen:
- US-A1- 2007 061 043
- MASSON F ET AL: "Hybrid architecture for simultaneous localization and map building in large outdoor areas", PROCEEDINGS OF THE 2002 IEEE/RSJ INTERNATIONAL CONFERENCE ON INTELLIGENT ROBOTS AND SYSTEMS. (IROS 2002). LAUSANNE, SWITZERLAND, SEPT. 30 - OCT. 4, 2002; [IEEE/RSJ INTERNATIONAL CONFERENCE ON INTELLIGENT ROBOTS AND SYSTEMS], NEW YORK, NY : IEEE, US, Bd. 1, 30. September 2002 (2002-09-30), Seiten 570-575, XP010609312, DOI: 10.1109/IRDS.2002.1041451 ISBN: 978-0-7803-7398-3
- HUGH DURRANT-WHYTE ET AL: "Simultaneous Localisation and Mapping (SLAM): Part I The Essential Algorithms", ROBOTICS & AUTOMATION MAGAZINE, 5. Juni 2006 (2006-06-05), Seiten 99-110, XP55066899,

## Beschreibung

Die Erfindung betrifft ein Verfahren zur gleichzeitigen Bestimmung und Kartenbildung (Simultaneous Localisation and Mapping - SLAM) zur Selbstlokalisierung eines selbsttätig verfahrbaren Geräts, insbesondere selbsttätig verfahrbaren Bodenstaub-Aufsammelgeräts, mit vorzugsweise elektromotorisch angetriebenen Verfahrrädern, wobei das Gerät mit einer Hinderniserkennung versehen ist, die aus optischen Sende- und Empfängereinheiten besteht, wobei weiter eine Vielzahl von möglichen Positionen und Ausrichtungen (Partikel) ausgehend von einer angenommenen ersten, vorher berechneten Position des Gerätes berechnet werden und nach einem entsprechenden Verfahren des Geräts im Hinblick auf die dann eingenommene zweite Position anhand der Messergebnisse der optischen Einheiten einer der zuvor generierten Partikel nach einem vorgegebenen, die Wahrscheinlichkeit berücksichtigenden Auswahlalgorithmus als neuer Standort des Geräts angenommen wird.

Verfahren der in Rede stehenden Art sind bekannt, so bspw. im Zusammenhang mit selbsttätig verfahrbaren Saug- und/oder Reinigungsgeräten zur Abreinigung von Fußböden, darüber hinaus in weiterer Ausgestaltung bspw. im Zusammenhang mit einem selbsttätig verfahrbaren Transportgerät oder Rasen-mähgerät. Derartige Geräte sind bevorzugt mit Abstandssensoren versehen, um so bspw. einer Kollision mit im Verfahrweg stehenden Gegenständen oder dergleichen entgegenzuwirken. Diese Sensoren arbeiten bevorzugt berührungslos, so weiter bevorzugt als Licht- oder Ultraschallsensoren. Hierzu ist es weiter bekannt, das Gerät mit Mitteln zur Rundum-Abstandsmessung zu versehen, so weiter bspw. in Form eines optischen Triangulationssystems, welches auf einer um eine Vertikalachse rotierenden Plattform oder dergleichen angeordnet ist. Mittels eines solchen Systems können Abstandsmessungen zufolge Reflektionen erreicht werden, welche Abstandsmessungen zur Raumorientierung, weiter insbesondere im Zuge der selbsttätigen Arbeit zur Hinderniserkennung sowie weiter bevorzugt zum Anlegen einer Karte der zu befahrenden Räumlichkeit und somit entsprechend zur Erstellung einer Kartierung genutzt werden. Diesbezüglich wird bspw. auf die DE 2008 014 912 A1 verwiesen. Die zufolge der Abstandsmessung erfassten Raumbegrenzungen, ggf. unter Berücksichtigung etwaiger Hindernisse in den Räumen, werden bevorzugt in Form einer Kartierung der Umgebung, insbesondere der aus mehreren Räumen bestehenden Wohnung abgelegt, weiter bevorzugt in einem nicht flüchtigen Speicher des Gerätes, so dass im Zuge eines Reinigungs- oder Transportvorganges auf diese Kartierung zur Orientierung zurückgegriffen werden kann. Weiter ist diesbezüglich bekannt, anhand einer derart hinterlegten Kartierung zufolge weiter hinterlegter Algorithmen eine günstige Verfahrstrategie des Gerätes zu ermitteln, dies weiter auch bei Erkennung eines bevorzugt im Verfahrweg des Gerätes liegenden und über den Sensor erfassten Gegenstandes. Hierzu ist jeweils eine möglichst exakte Ermittlung des Abstandswertes zu dem Gegen-stand, wie bspw. ein Möbel oder einer Wandbegrenzung, nötig.

Darüber hinaus sind Verfahren zur simultanen Lokalisation und Kartenbildung bekannt, so insbesondere unter dem Begriff SLAM. Diesbezüglich wird auf den wissenschaftlichen Artikel "Simultaneous Lokalisation and Mapping (SLAM)" Hugh Durrant-Whyte, Fellow, IEEE and Tim Bailey, Part I, erschienen im Magazin "Robotics & Automation Magazine, IEEE", Juni 2006, verwiesen. SLAM behandelt hierbei das Problem eines beweglichen Roboters, der sich durch eine Umgebung bewegt, von der keine Karte vorhanden ist. Der Roboter bildet relative Beobachtungen von seiner Ego-Bewegung und von den Eigenschaften in seiner Umgebung. Das Ziel von SLAM ist eine Karte der Umgebung und des Weges aufzubauen, die durch den Roboter bzw. das selbsttätig verfahrbare Gerät erstellt und benutzt werden kann. Zum Auffinden der tatsächlichen Position wird hierbei eine Vielzahl von möglichen Gerätepositionen und Orientierungen untersucht. Eine mögliche Geräteposition und/oder Ausrichtung wird im SLAM als Partikel bezeichnet, wobei jeder dieser Partikel für eine mögliche Geräteposition und/oder Ausrichtung steht. Eine wahrscheinliche Position wird hierbei als ein Partikel mit einer hohen Gewichtung repräsentiert. Ein unwahrscheinliches Partikel erhält demzufolge eine niedrige Gewichtung und trägt kaum bis hin zu gar nicht zur Lokalisierung bei. Wird das Gerät bewegt, werden im Folgenden Partikel um die wahrscheinlichste Position und Ausrichtung "gestreut" . "Streuen" bedeutet hierbei, dass Partikel aus der letzten Generation nachfolgend weitere Partikel generieren, die dann für die neue Position des Gerätes stehen. Im Anschluss an das Streuen der Partikel werden diese Partikel mit dem Messergebnis der optischen Einheiten abgeglichen und entsprechend gewichtet. Das Partikel-Streuen wird hierbei üblicherweise auf eine feste Anzahl, bspw. eintausend, beschränkt. Die Partikel werden dann um die wahrscheinlichste aktuelle Position gemäß einer Gaußverteilung gestreut.

Darüber hinaus ist zum Stand der Technik auf die US 2007/0061043 A1 und die Literaturstelle Proceedings of the 2002 IEEE/RSJ International Conference on Intelligent Robots and Systems (IROS 2002): "Hybrid architecture for simultaneous localization and map building in large outdoor areas" (F. Masson et al.) - 30. September bis 4. Oktober 2002 in Lausanne, Schweiz, veröffentlicht von IEEE in NEW YORK, NY, USA am 30. September 2002, Bd. 1, Seiten 570-575, XP010609312, DOI: 10.1109/IRDS.2002.1041451 ISBN: 978-0-7803-7398-3.

Ausgehend von dem dargelegten Stand der Technik beschäftigt sich die Erfindung mit der Aufgabenstellung, das Verfahren zur gleichzeitigen Bestimmung und Kartenbildung zur Selbstlokalisierung eines selbsttätig verfahrbaren Gerätes weiter zu verbessern.

Diese Aufgabe ist beim Gegenstand des Anspruches 1 gelöst, wobei darauf abgestellt ist, dass die Berechnung der Partikel im Hinblick auf einen durch die vorgegebene Verfahrrichtung und Verfahr-weite bzw. Verfahrgeschwindigkeit des Gerätes bestimmten Raumwinkel und Abstandsbereich eingeschränkt wird. Zufolge der vorgeschlagenen Lösung ist der technisch notwendige Aufwand zur Berechnung der eingenommenen Position deutlich verringert. Aus dem Stand der Technik ist bekannt, für jeden Streuvorgang die Gaußverteilung neu zu berechnen. Entsprechend erhöht sich der Rechenaufwand (Gaußberechnungen) je mehr Partikel gestreut werden. Insbesondere treten hierbei eine Vielzahl an Gaußberechnungen auf, die durch die enthaltenen Exponentialfunktionen sehr rechenintensiv sind. Dies kann dazu führen, dass sehr leistungsstarke Mikroprozessoren eingesetzt werden müssen. Allein eine Reduzierung der Partikel-Anzahl, was bereits Rechenleistung einspart, kann unter Anwendung der Gaußverteilung durch den Zufallsfaktor dieser Verteilung dazu führen, dass unter ungünstigen Umständen in der Nähe der tatsächlichsten Position kein Partikel gestreut wurde und somit die Lokalisiesierung ungenau wird. Dieser Problematik ist durch die vorgeschlagene Erfindung entgegengewirkt. Anstatt bei jedem Vorgang der Partikelstreuung neue Gaußverteilungen berechnen zu müssen, wird vorgeschlagen, die PartikelStreuung in einem eingeschränkten Bereich fest vorzunehmen. Hierdurch kann der Rechenaufwand erheblich gemindert werden. Hierbei wird zufolge der räumlichen Begrenzung unter Berücksichtigung der Eigenarten des Systems des selbsttätig verfahrbaren Geräts die Anzahl der Partikel eingegrenzt. Das Verfahren erweist sich insgesamt effizienter und bei einer Verringerung der Partikel exakter im Hinblick auf die Lokalisierung. Die Partikel werden zur Berechnung der möglichen eingenommenen zweiten Position diskret gestreut, wobei die diskrete Vorgabe möglicher Partikel hierbei einer Gauß-förmigen Verteilung angenähert ist. Der den Streubereich der Partikel definierende Raumwinkel und Abstandsbereich zur angenommenen und zumindest tatsächlich erscheinenden ersten, vorherberechneten Position des Gerätes berücksichtigt hierbei die wahrscheinliche Geräteposition aufgrund der translatorischen Bewegung des Gerätes. So wird insbesondere in üblicher Verfahrrichtung des Gerätes vor diesem, ausgehend von einer angenommenen ersten, vorherberechneten Position ein eingeschränkter Streubereich für die Partikel berechnet, wobei weiter bevorzugt neben der Verfahrrichtung des Gerätes auch die Verfahrweite bzw. die Verfahrgeschwindigkeit des Gerätes als Parameter in die Berechnung des Streubereiches einfließen. Der eingeschränkte Streubereich ist hierbei bevorzugt ein von der ersten Position ausgehender Segmentbereich der Geräteumgebung, bspw. Kreissegmentbereich, oder Teilbereich desselben. Anhand der Messergebnisse der weiter vorgesehenen Hinderniserkennung bzw. der optischen Sende- und Empfängereinheiten wird hiernach einer der zuvor in dem beschränkten Streubereich generierten Partikel unter Nutzung eines entsprechenden Auswahlalgorithmus als neuer Standort des Gerätes angenommen.

Weitere Merkmale der Erfindung sind nachstehend, auch in der Figurenbeschreibung, oftmals in ihrer bevorzugten Zuordnung zum Gegenstand des Anspruches 1 oder zu Merkmalen weiterer Ansprüche erläutert.

Der vorgesehene und aus dem Stand der Technik vorbekannte Rundum-Sensor zur Hinderniserkennung sendet einen Messstrahl aus. Dieser ermittelt den Abstand zu dem Auftreffort des Messstrahls auf das nächste Hindernis, zum Beispiel eine Wand oder ein Möbelstück. Als Messmethode kommt hierbei bevorzugt ein Lichtlaufzeitverfahren (ToF, time of flight) zum Einsatz. Ein Phasenkorrelationsverfahren (PKS) ist diesbezüglich auch möglich. Weiter bevorzugt kommt ein Triangulationsverfahren in Betracht. Der Messstrahl kann als Linie (Divergenzwinkel des Strahls sehr klein, kleiner als 50 mrad, was bevorzugt typischerweise zu einem Strahldurchmesser im Bereich von 1 bis 22 mm führt) oder als ausgedehnter Strahl ausgebildet sein. Hierbei wird bevorzugt ein Strahl mit einer Divergenz von 2 bis 4 mrad verwendet, der bei einer Entfernung von 3 m einen Durchmesser von 20 bis 30 mm erreicht. Der Empfangsbereich des Sensors ist in gleicher Weise bevorzugt als divergente Empfangskeule ausgebildet, wobei zur Kompensation von Toleranzen dessen Divergenz größer ist (z.B. um einen Faktor 2) als der des Sendestrahls.

Der berührungsfrei arbeitende Sensor zur Messung eines Abstandes zu einem Gegenstand ist mit mindestens einer optischen Lichtquelle ausgestattet, welche den Messstrahl erzeugt. Die Lichtquelle sendet Licht im sichtbaren oder unsichtbaren Wellenlängenbereich aus, z.B. rot im Bereich von 650 nm oder grün im Bereich von 532 nm. Bevorzugt wird Licht im Infrarotbereich mit einer Wellenlänge von mehr als 700 nm, weiter bevorzugt Strahlquellen (Laserdioden oder LEDs) mit Wellenlängen von bspw. 785 nm, 850 nm oder 980 nm. Bei der Lichtquelle kann es sich um eine Lampe oder LED handeln, bevorzugt werden jedoch Laserdioden vorgesehen.

Weiter ist der Sensor bevorzugt mit wenigstens einem optischen Empfangselement ausgestattet, welches mindestens im gewählten Wellenlängenbereich des Sende-Elements empfindlich ist, weiter bevorzugt ausgeführt bspw. als mindestens eine Fotodiode, Fotowiderstand, CCD-Chip oder CMOS-Chip. Der optische Empfänger kann als einzelnes Empfangs-Element zur Erfassung eines einzelnen eingehenden Lichtsignals oder als mehrzelliges Array bzw. als mehrzellige Zeile zur simultanen oder sequenziellen Erfassung mehrerer eingehender Lichtsignale ausgebildet sein. Es sind diesbezüglich auch ausgedehnte Sensoren bekannt, bspw. linienförmige oder flächige PSD-Elemente.

Der Lichtquelle und auch dem lichtempfindlichen Element können wahlweise optische Elemente zugeordnet sein (bevorzugt zur Ausformung eines Sendestrahls/Sendekegels bzw. Empfangsstrahls/Empfangskegels), ohne dass diese im Folgenden explizit aufgeführt sind. Optische Elemente können sein Linsen (Sammellinsen, Zerstreuungslinsen, auch als Fresnellinsen ausgeführt, asphärisch oder sphärisch), Blenden (kreisförmig, schlitzförmig, beliebig geformt, als eigene Teile ausgeführt oder im Gehäuse des Sensors integriert), Prismen, Spiegel (plan, konkav, konvex, Freiform), Lichtleiter oder auch Freiformelemente. Unter optischen Elementen werden auch Schutz- oder Abdeckscheiben im optischen Strahlengang verstanden, die dem mechanischen Schutz der optischen Einrichtung dienen. Bevorzugt werden zugeordnet der Lichtquelle und/oder dem lichtempfindlichen Element optische Filter vorgesehen, die für die vorgesehene optische Wellenlänge möglichst gut durchlässig sind, für andere aber jedoch möglichst wenig durchlässig. Optische Filter können als separate Elemente vorgesehen sein oder integriert in anderen optischen Elementen (z.B. Einfärbung oder Beschichtung von Linsen, Schutzfenstern usw.). Möglich sind weiter Einfärbungen, Beschichtungen, Bedampfungen usw. Werden Spiegel verwendet, so sind Oberflächenspiegel bevorzugt, da diese geringere optische Verluste aufweisen. In diesem Fall bietet es sich weiter an, den Spiegel als Kunststoff-Spritzgussteil auszuführen und die eigentliche Spiegelfläche als oberflächige Beschichtung mit einer reflektierenden Schicht vorzusehen. Hier bietet sich die Verwendung von metallischen Schichten an, bspw. Silber, Gold oder Kupfer, weiter bevorzugt Aluminium. Bei Benutzung von Aluminium ist weiter bevorzugt als weitere Beschichtung (Passivierung) eine Korrosionsschutzschicht vorgesehen.

In bevorzugter Ausgestaltung werden innerhalb des Raumwinkels und Abstandsbereiches, weiter entsprechend bevorzugt in dem beschränkten Partikel-Streubereich, wiederum Bereiche höherer Aufenthaltswahrscheinlichkeiten und niedriger Aufenthaltswahrscheinlichkeiten definiert, wobei bevorzugt in einem Bereich höherer Aufenthaltswahrscheinlichkeiten mehr Partikel berechnet werden als in den Bereichen niedrigerer Aufenthaltswahrscheinlichkeiten. Entsprechend ergibt sich bevorzugt am Ort der wahrscheinlichsten Geräteposition eine höhere Partikeldichte als weiter bevorzugt in Randbereichen des eingeschränkten Partikel-Streubereiches. Insbesondere in diesen Randbereichen der Verteilung sind weiter bevorzugt auch Partikel vorgegeben (niedrige Aufenthaltswahrscheinlichkeiten), um so größere Abweichungen des Gerätes während der Fahrt (bspw. durch Schlupf der Antriebsräder) bei der Lokalisierung berücksichtigen zu können.

In weiter bevorzugter Ausgestaltung werden hinsichtlich des den eingeschränkten Partikel-Streubereich definierenden Abstandsbereiches eine distale und eine proximale Linie vorgegeben, innerhalb welcher nur Partikel berechnet werden. Durch die Begrenzung mittels distaler und proximaler Linien ergibt sich bevorzugt eine insgesamt bananen- bzw. bumerangähnliche Kontur des eingeschränkten Partikel-Streubereiches, wobei weiter bevorzugt die proximale Linie des Abstandsbereiches in Verfahrrichtung des Gerätes beabstandet ist zu der angenommenen ersten, vorherberechneten Position des Gerätes. Dieser Abstand ist weiter bevorzugt abhängig von der Verfahrweite bzw. Verfahrgeschwindigkeit des Gerätes, wie auch insbesondere der Abstand der distalen Linie zur proximalen Linie und dementsprechend die Ausweitung des Bereiches in Verfahrrichtung des Gerätes.

Die distale und proximale Linie sind weiter bevorzugt Radiuslinien ausgehend von der angenommenen ersten Position des Gerätes, weiter bevorzugt Radiuslinien ausgehend von dem Partikel, der die wahrscheinlichste und somit ggf. die tatsächliche aktuelle (erste) Position des Gerätes definiert.

In weiterer Ausgestaltung ist vorgesehen, dass angrenzend an den Raumwinkelgrenzen auch Partikel in einem Bereich berechnet werden, der näher an der vorher berechneten Position des Gerätes heranreicht als in einem den Raumwinkelgrenzen entfernteren Bereich. Zufolge dieser Weiterbildung ist einem "Verlieren" des Gerätes auch in bspw. bodenbelagsbedingten Extremfällen entgegengewirkt. So kann bspw. durch Blockierung oder vollständiges Durchdrehen der bevorzugt zwei vorgesehenen, elektromotorisch angetriebenen Verfahrräder des Gerätes das Gerät quasi auf der Stelle bleiben. Die Position ist entsprechend unverändert oder annähernd unverändert beibehalten. Der eingeschränkte Partikel-Streubereich ist zufolge der vorgeschlagenen Lösung erweitert bzw. ergänzt durch einen begrenzten Streubereich um die aktuelle, zuvor berechnete Position des Gerätes. Alternativ oder auch kombinativ hierzu werden Partikel in einem Bereich berechnet, der eine mögliche Position des Gerätes nach einem Verfahren desselben abdeckt, bei welchem Verfahren bspw. zufolge Blockierung eines der angetriebenen Räder bzw. vollständigen Durchdrehens eines der beiden Verfahrräder eine extrem gegenüber der vorgegebenen Verfahrrichtung abdrehende Verfahrrichtung eingeschlagen wird. Diese weiteren Partikel-Streubereiche bzw. diese erweiterten Partikel-Streubereiche werden in bevorzugter Ausgestaltung als Bereiche niedriger Aufenthaltswahrscheinlichkeit definiert, weiter entsprechend bevorzugt mit gegenüber Bereichen höherer Aufenthaltswahrscheinlichkeit niedrigerer Partikeldichte. Nachstehend ist die Erfindung anhand der beigefügten Zeichnung, welche lediglich Ausführungsbeispiele darstellt, näher erläutert. Es zeigt:
- Fig. 1: ein selbsttätig verfahrbares Gerät in Form eines Bodenstaub-Aufsammelgeräts in perspektivischer Darstellung;
- Fig. 2: in schematischer Darstellung eine erfindungsgemäße eingeschränkte Partikelstreuung zur Lokalisation und Kartenbildung;
- Fig. 3: eine der Fig. 2 entsprechende Darstellung, betreffend eine weitere Ausführungsform;
- Fig. 4: eine weitere der Fig. 2 entsprechende Darstellung in weiterer Ausführungsform;
- Fig. 5: in weiterer Ausführungsform eine der Fig. 2 entsprechende Darstellung, eine Kombination der Ausführungen gemäß Fig. 3 und Fig. 4 betreffend.

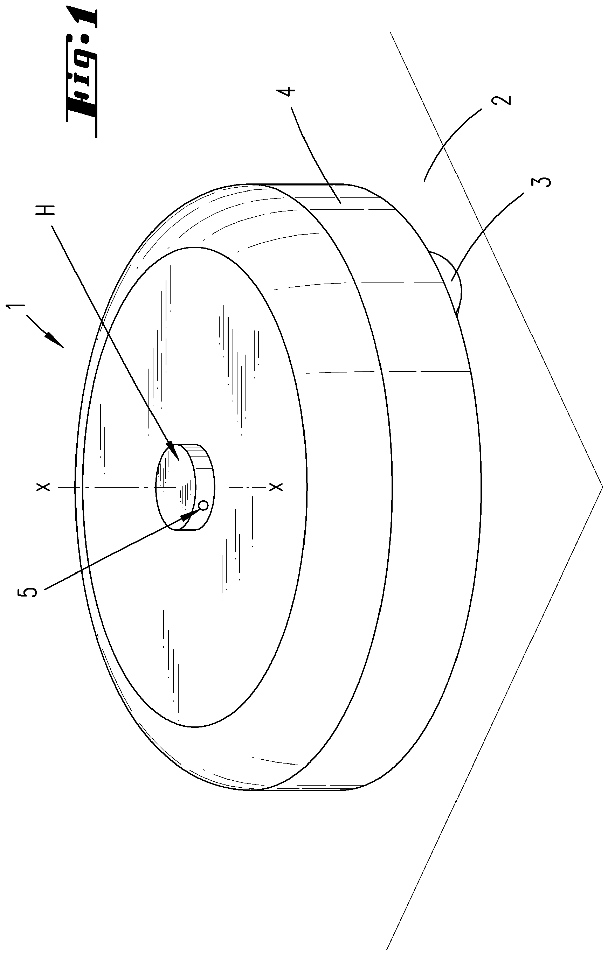

Dargestellt und beschrieben ist zunächst mit Bezug zu Fig. 1 ein Gerät 1 in Form eines Saug- und/oder Kehrgeräts, weiter in Form eines selbsttätig verfahrbaren Haushalts-Saugroboters. Dieses besitzt ein Chassis, welches unterseitig, dem zu pflegenden Boden 2 zugewandt, elektromotorisch angetriebene Verfahrräder 3 sowie bevorzugt eine über die Unterkante des Chassisbodens hinausragende, gleichfalls elektromotorisch angetriebene Bürste trägt. Das Chassis ist überfangen von einer Gerätehaube 4, wobei das Gerät einen kreisförmigen Grundriss aufweist. Bezüglich der Ausgestaltung des Gerätes 1 als Saug- und/oder Kehrgerät wird bspw. auf die eingangs aufgeführte DE 102 42 257 A1 verwiesen.

Weiter kann, wenngleich nicht dargestellt, das Gerät 1 zusätzlich oder auch alternativ zu der Bürste eine Saugmundöffnung aufweisen. In diesem Fall ist in dem Gerät 1 weiter ein Sauggebläsemotor angeordnet, der elektrisch betrieben ist.

Die Elektroversorgung der einzelnen Elektrokomponenten des Gerätes 1 wie für den Elektromotor der Verfahrräder 3, für den Elektroantrieb der Bürste, ggf. für das Sauggebläse und darüber hinaus für die weiter vorgesehene Elektronik in dem Gerät 1 zur Steuerung desselben erfolgt über einen nicht dargestellten, wieder aufladbaren Akkumulator.

Das Gerät 1 ist weiter mit einer Abstands-/Hinderniserkennung H in Form eines ersten, berührungsfrei arbeitenden Sensors 5 versehen, aufweisend eine Lichtstrahl-Aussendevorrichtung und eine Lichtstrahl-Empfangsvorrichtung. Dieser Sensor 5 ist oberseitig der Gerätehaube 4 des Gerätes 1 angeordnet und um eine vertikale Achse x, welche zugleich die Zentralvertikalachse des Gerätes 1 darstellt, drehbar. Der Sensor 5 besteht bevorzugt aus einem Triangulationssystem, mittels welchem eine Rundum-Abstandsmessung (über 360° um die Achse x, Pfeil d in Fig. 1) durchgeführt werden kann.

Mit Hilfe des Sensors 5 ist zunächst eine Hinderniserkennung erreicht, dies zufolge rotierender Abtastung in einer bevorzugt horizontalen Abtastebene, d.h. in einer zu dem Boden 2 parallel verlaufenden Ebene, so dass das Gerät 1 kollisionsfrei sich auf dem Boden 2 bzw. in seiner Umgebung bewegen kann. Darüber hinaus ist, wie weiter bevorzugt, über den Sensor 5 eine Rundum-Abstandsmessung der Umgebung ermöglicht, wobei die hierbei ermittelten Entfernungswerte zu Hindernissen und Wänden in der Umgebung bevorzugt zur Erstellung einer Kartografie des gesamten Gebietes genutzt werden, welche Kartografie in dem Gerät 1 abgespeichert und hinterlegt wird.

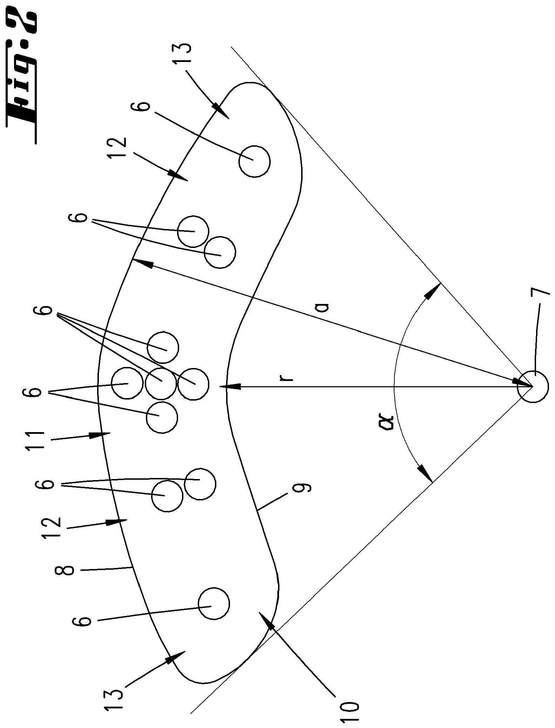

Zur Selbstlokalisierung, entsprechend zur gleichzeitigen Bestimmung und Kartenbildung ist ein Verfahren vorgesehen, welches schematisch in Fig. 2 dargestellt ist. Hierbei wird im SLAM eine Vielzahl von möglichen Positionen und Ausrichtungen in Form von Partikeln 6 ausgehend von einer angenommenen ersten, vorherberechneten Position (Partikel 7) des Gerätes 1 berechnet und nach einer entsprechenden Verfahrbewegung des Gerätes in Pfeilrichtung r im Hinblick auf die dann eingenommene zweite Position anhand der Messergebnisse der Hinderniserkennung H eine der zuvor generierten Partikel 6 nach einem vorgegebenen, die Wahrscheinlichkeit berücksichtigenden Auswahlalgorithmus als neuer Standort des Gerätes 1 angenommen. Hierbei ist die Berechnung der Partikel 6 im Hinblick auf einen durch die vorgegebene Verfahrrichtung r und Verfahrweite bzw. Verfahrgeschwindigkeit des Gerätes bestimmten Raumwinkel α und Abstandsbereich a eingeschränkt, jeweils bezogen auf den Partikel 7, der die angenommene erste, vorherberechnete Position des Gerätes 1 darstellt. Der Raumwinkel α erstreckt sich bevorzugt über 60° bis 120°, weiter bevorzugt 90°, wobei weiter bevorzugt der Verfahrweg des Gerätes 1 eine zumindest annähernde Winkelhalbierende darstellt. Der Abstandsbereich a wird bevorzugt abhängig von der Verfahrgeschwindigkeit bzw. des zu vollziehenden Verfahrweges des Gerätes 1 berechnet.

Darüber hinaus wird bevorzugt eine distale Linie 8 und eine proximale Linie 9 vorgegeben, welche weiter bevorzugt Radiuslinien ausgehend von der angenommenen ersten Position des Gerätes 1, weiter bevorzugt ausgehend von dem diese angenommene erste Position darstellenden Partikel 7 sind.

Die distale und proximale Linie 8 und 9 begrenzen zusammen mit dem Raumwinkel α einen Partikel-Streubereich 10, innerhalb welchen Bereiches 10 die nach dem Verfahren eingenommene zweite Position des Gerätes 1 wahrscheinlich ist.

Innerhalb des Partikel-Streubereiches 10 wird insbesondere im Schnittbereich zur Verfahrlinie des Gerätes 1 ein Bereich 11 höherer Aufenthaltswahrscheinlichkeit definiert, dies zufolge einer erhöhten Dichte von Partikeln 6. Um größere Abweichungen des Gerätes im Zuge der Verfahrbewegung bei der Lokalisierung berücksichtigen zu können, sind beidseitig des Bereiches 11 erhöhter Partikeldichte weitere Bereiche 12 und 13 mittlerer bis niedrigerer Aufenthaltswahrscheinlichkeiten definiert, dies entsprechend zufolge gemäßigter Partikeldichte.

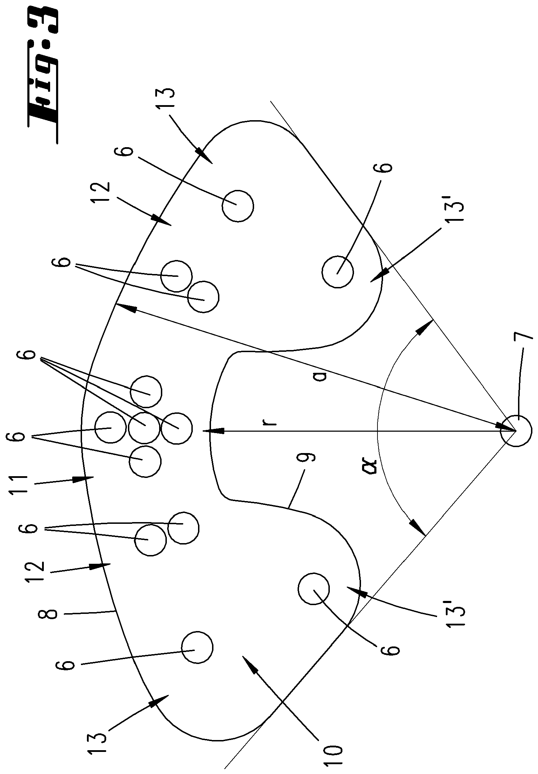

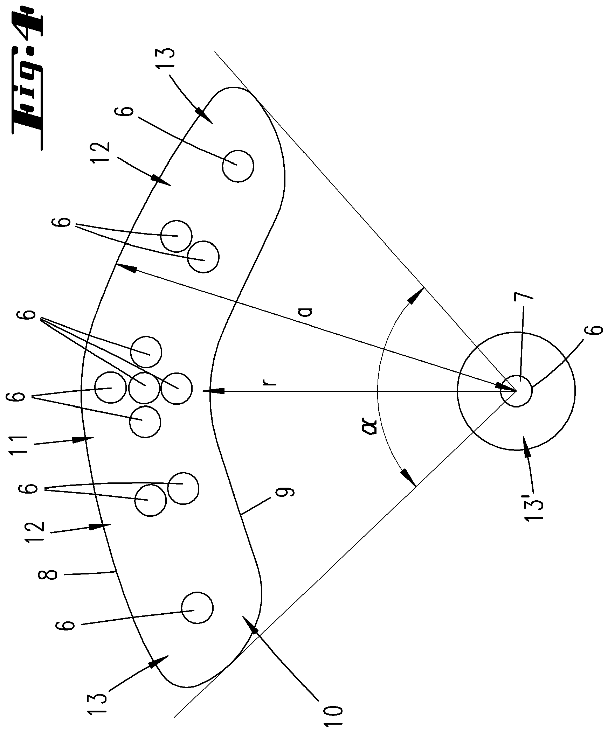

Die Figuren 3 und 4 zeigen anhand zweier weiterer Ausführungsbeispiele jeweils eine Erweiterung des Partikel-Streubereiches 10 um Bereiche 13', die entsprechend mit einer niedrigeren Aufenthaltswahrscheinlichkeit mit weniger Partikeln 6 belegt sind. Diese Bereiche 13' decken mögliche Bereiche ab, die insbesondere aufgrund eines Verfahr-Fehlverhaltens des Gerätes 1 eine Berechnung der momentanen Position des Gerätes 1 ermöglichen sollen. So ist gegenüber dem Ausführungsbeispiel in Fig. 2 der Partikel-Streubereich 10 innerhalb des durch den Raumwinkel α begrenzten Bereiches jeweils randseitig nach innen in Richtung auf die zuvor berechnete Position erweitert, so dass bspw. bei einer Blockierung oder einem vollständigen Durchdrehen eines der beiden Verfahrräder 3 des Gerätes 1 und damit im Zuge des Verfahrens einhergehendem Abdrehen des Gerätes 1 in eine mit Bezug auf den gesamten Streubereich betrachtete Eckposition weiterhin die Ermittlung der möglichen Position erreicht werden kann.

In Fig. 4 ist ein solcher weiterer Bereich 13' der zuvor ermittelten Position des Gerätes 1 zugeordnet, zur Ermittlung der neuen Position bspw. bei einem Blockieren oder vollständigen Durchdrehen beider Verfahrräder 3.

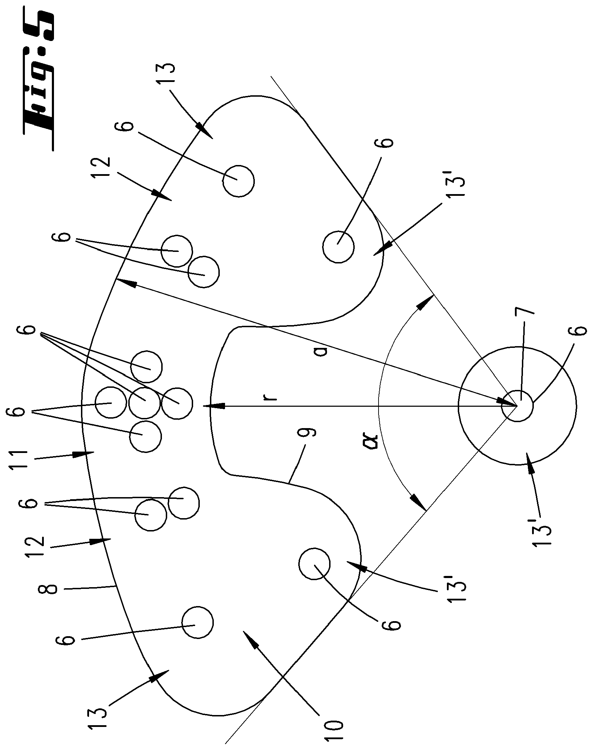

Fig. 5 zeigt eine Kombination der Ausführungen gemäß Figuren 3 und 4. In dieser Ausbildung sind bevorzugt alle zu erreichenden Positionen des Gerätes 1 nach einem Verfahren bzw. nach einem Verfahrversuch durch den sich aus mehreren Bereichen höherer, mittlerer und niedrigerer Aufenthaltswahrscheinlichkeit zusammensetzenden Partikel-Streubereich 10 erfasst.

Nach einem entsprechenden Verfahren des Gerätes 1 wird im Hinblick auf die dann eingenommene zweite Position anhand der Messergebnisse der Hinderniserkennung H einer der zuvor generierten Partikel 6 innerhalb des Partikel-Streubereiches 10 nach einem vorgegebenen, die Wahrscheinlichkeit berücksichtigenden Auswahlalgorithmus als neuer Standort des Gerätes 1 angenommen.

Der hiernach die wahrscheinliche Position des Gerätes 1 darstellende Partikel 6 ist zur Berechnung der nächsten Geräteposition gleich dem vorbeschriebenen Partikel 7 der Ausgangspartikel, von welchem aus der nächste Partikel-Streubereich 10 unter Berücksichtigung der Verfahrrichtung r berechnet wird. Die Partikelstreuung und Berechnung erfolgt bevorzugt kontinuierlich im Zuge des Verfahrens des Gerätes.

### Bezugszeichenliste

- 1: Gerät
- 2: Boden
- 3: Verfahrrad
- 4: Gerätehaube
- 5: Sensor
- 6: Partikel
- 7: Partikel
- 8: distale Linie
- 9: proximale Linie
- 10: Partikel-Streubereich
- 11: Bereich höherer Aufenthaltswahrscheinlichkeit
- 12: Bereich mittlerer Aufenthaltswahrscheinlichkeit
- 13: Bereich niedriger Aufenthaltswahrscheinlichkeit
- 13': Bereich niedriger Aufenthaltswahrscheinlichkeit

- a: Abstandsbereich
- r: Verfahrrichtung
- x: Drehachse

- H: Hinderniserkennung

- α: Raumwinkel

## Patentansprüche

1. Verfahren zur gleichzeitigen Bestimmung und Kartenbildung zur Selbstlokalisierung eines selbsttätig verfahrbaren Geräts (1), insbesondere selbsttätig verfahrbaren Bodenstaub-Aufsammelgeräts, mit vorzugsweise elektromotorisch angetriebenen Verfahrrädern (3), wobei das Gerät (1) mit einer Hinderniserkennung (H) versehen ist, die aus optischen Sende- und Empfängereinheiten besteht, wobei weiter eine Vielzahl von möglichen Partikel (6), d.h. Positionen und Ausrichtungen, ausgehend von einer angenommenen ersten, vorherberechneten Position des Gerätes (1) berechnet und nach einem entsprechenden Verfahren des Gerätes (1) im Hinblick auf die dann eingenommene zweite Position anhand der Messergebnisse der optischen Einheiten einer der zuvor generierten Partikel (6) nach einem vorgegebenen, die Wahrscheinlichkeit berücksichtigenden Auswahlalgorithmus als neuer Standort des Gerätes (1) angenommen wird, **dadurch gekennzeichnet, dass** die Berechnung der Partikel (6) im Hinblick auf einen durch die vorgegebene Verfahrrichtung (r) und Verfahrweite bzw. Verfahrgeschwindigkeit des Gerätes (1) bestimmten Raumwinkel (α) und Abstandsbereich (a) eingeschränkt wird.

2. Verfahren nach Anspruch 1, **dadurch gekennzeichnet, dass** innerhalb des Raumwinkels (α) und Abstandsbereichs (a) wiederum Bereiche höherer Aufenthaltswahrscheinlichkeiten (11) und niedriger Aufenthaltswahrscheinlichkeiten (13) definiert werden und dass in einem Bereich höherer Aufenthaltswahrscheinlichkeiten (11) mehr Partikel (6) berechnet werden als in den Bereichen niedrigerer Aufenthaltswahrscheinlichkeiten (13).

3. Verfahren nach einem der vorhergehenden Ansprüche, **dadurch gekennzeichnet, dass** hinsichtlich des Abstandsbereiches (a) eine distale (8) und proximale Linie (9) vorgegeben werden, innerhalb welcher nur Partikel (6) berechnet werden.

4. Verfahren nach Anspruch 3, **dadurch gekennzeichnet, dass** die distale (8) und proximale Linie (9) Radiuslinien ausgehend von der angenommenen ersten Position des Gerätes (1) sind.

5. Verfahren nach einem oder mehreren der vorhergehenden Ansprüche, **dadurch gekennzeichnet, dass** angrenzend an Raumwinkelgrenzen auch Partikel (6) in einem Bereich (13') berechnet werden, der näher an der vorher berechneten Position des Gerätes (1) heranreicht als in einem den Raumwinkelgrenzen entfernteren Bereich.

## Claims

1. Method for simultaneous localisation and mapping for the self-localisation of an automatically movable device (1), in particular an automatically movable floor-type dust collector, comprising preferably electric-motor-driven travel wheels (3), the device (1) being provided with obstacle recognition (H) that consists of optical transmitting units and receiving units, a plurality of possible particles (6), i.e. positions and orientations, also being calculated starting from an assumed first position of the device (1) that has been calculated in advance and, in accordance with corresponding travel of the device (1) in respect of the second position that is then occupied, said particles being assumed to be the new location of the device (1) in accordance with a specified selection algorithm that takes into account the probability on the basis of the measurement results from the optical units of one of the previously generated particles (6), **characterised in that** the calculation of the particles (6) is restricted in respect of a solid angle (α) and distance range (a) determined by the specified travel direction (r) and travel extent or travel speed of the device (1).

2. Method according to claim 1, **characterised in that**, within the solid angle (α) and distance range (a), areas having higher occupation probabilities (11) and lower occupation probabilities (13) being defined and **in that** more particles (6) are calculated in a region having higher occupation probabilities (11) than in the regions having lower occupation probabilities (13).

3. Method according to either of the preceding claims, **characterised in that** a distal (8) and a proximal (9) line are specified with respect to the distance range (a), and particles (6) are only calculated within said lines.

4. Method according to claim 3, **characterised in that** the distal (8) and the proximal (9) line are radius lines extending from the assumed first position of the device (1).

5. Method according to one or more of the preceding claims, **characterised in that**, bordering on solid-angle boundaries, particles (6) are also calculated in a region (13') that comes closer to the previously calculated position of the device (1) than in a region that is further from the solid-angle boundaries.

## Revendications

1. Procédé pour la détermination et la formation de cartes simultanées pour l'auto-localisation d'un appareil (1) se déplaçant automatiquement, en particulier d'un appareil de collecte de poussière au sol se déplaçant automatiquement, qui comprend des roues de déplacement (3) à entraînement de préférence électromotorisé, dans lequel l'appareil (1) est pourvu d'un dispositif de détection d'obstacle (H) qui consiste en des unités optiques d'émission et de réception, dans lequel en outre sont calculées une pluralité de particules possibles (6), c'est-à-dire des positions et orientations, à partir d'une première position supposée et précalculée de l'appareil (1), et après un déplacement correspondant de l'appareil (1), l'une des particules (6) précédemment générées est supposée être le nouvel emplacement de l'appareil (1) par rapport à la deuxième position prise, sur la base des résultats des mesures des unités optiques selon un algorithme de sélection prédéterminé qui tient compte de la probabilité, **caractérisé en ce que** le calcul des particules (6) est limité par rapport à un angle spatial (a) et un intervalle de distance (a) déterminés par la direction de déplacement prédéterminée (r) et la distance de déplacement ou vitesse de déplacement de l'appareil (1).

2. Procédé selon la revendication 1, **caractérisé en ce que** sont définies des régions à probabilités de séjour plus élevées (11) et des régions à probabilités de séjour plus faibles (13) à l'intérieur de l'angle spatial (a) et de l'intervalle de distance (a) et **en ce que** plus de particules (6) sont calculées dans une région à probabilités de séjour plus élevées (11) que dans les régions à probabilité de séjour plus faibles (13) .

3. Procédé selon l'une des revendications précédentes, **caractérisé en ce qu'**est prédéterminé pour ce qui concerne l'intervalle de distance (a), une ligne distale (8) et une ligne proximale (9) à l'intérieur desquelles seulement sont calculées des particules (6).

4. Procédé selon la revendication 3, **caractérisé en ce que** les lignes distale (8) et proximale (9) sont des lignes à rayon partant de la première position supposée de l'appareil (1).

5. Procédé selon une ou plusieurs des revendications précédentes, **caractérisé en ce que** des particules (6) sont également calculées dans une zone (13') adjacente aux limites de l'angle spatial et qui est plus proche de la position précédemment calculée de l'appareil (1) que dans une zone plus éloignée des limites de l'angle spatial.
